Europäisches Patentamt

European Patent Office

Office européen des brevets

(11) Veröffentlichungsnummer: **0 490 030 A2**

(12) **EUROPÄISCHE PATENTANMELDUNG**

(21) Anmeldenummer: **91115330.2**

(22) Anmeldetag: **11.09.91**

(51) Int. Cl.⁵: **B23B 29/24**, B23B 31/113

(30) Priorität: **08.12.90 DE 4039227**

(43) Veröffentlichungstag der Anmeldung:
**17.06.92 Patentblatt 92/25**

(84) Benannte Vertragsstaaten:
**ES FR GB IT**

(71) Anmelder: **Sauter Feinmechanik GmbH**
**Carl-Zeiss-Strasse 7**
**W-7430 Metzingen(DE)**

(72) Erfinder: **Thumm, Helmut, Dipl.-Ing. (FH)**
**Steinerweg 37**
**W-7430 Metzingen(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

(54) Verfahren und Vorrichtung zum Wechseln der Werkzeugscheibe eines Werkzeugrevolvers.

(57) Zum Wechseln der relativ zum Gehäuse eines Werkzeugrevolvers drehbaren und mit dem Gehäuse lösbar verbundenen Werkzeugscheibe (3) wird eine Spannvorrichtung (10,11) gelöst, damit die Werkzeugscheibe aus ihrer Arbeitsstellung, in der sie mit der von einem Drehantrieb drehbaren Antriebswelle (4) gekuppelt ist, in Richtung dieser Antriebswelle vom Gehäuse weg bis in eine Übergabeposition bewegt werden kann. Dann wird die Antriebswelle (4) und eine mit ihr gekuppelte Verbindungsstange (10) der Spannvorrichtung mittels des Drehantriebes aus einer Verbindungsstellung in eine Lösestellung gedreht, in welcher die Verbindung zwischen der in ihrer axialen Richtung relativ zum Gehäuse verschiebbaren Verbindungsstange (10) und der Werkzeugscheibe (3) gelöst ist, damit anschließend die Verbindungsstange aus der Werkzeugscheibe herausgezogen werden kann. Nun kann die Verbindungsstange (10) in Eingriff mit einer anderen Werkzeugscheibe (3) gebracht und danach mittels des Drehantriebs aus der Lösestellung in die Verbindungsstellung gedreht werden, in welcher die Verbindungsstange (10) in axialer Richtung formschlüssig mit der Werkzeugscheibe verbunden ist. Durch eine Relativbewegung zwischen dem Gehäuse und der Werkzeugscheibe (3) kann diese in ihre Arbeitsstellung gebracht und sodann festgespannt werden.

Fig.2

Die Erfindung betrifft ein Verfahren zum Wechseln der relativ zum Gehäuse eines Werkzeugrevolvers drehbaren und mit diesem Gehäuse lösbar verbundenen Werkzeugscheibe und eine Vorrichtung zur Durchführung dieses Verfahrens.

Bei Werkzeugrevolvern ist es üblich, nur die von der Werkzeugscheibe getragenen Werkzeuge oder Werkzeugmodule zu wechseln, nicht aber die Werkzeugscheibe selbst. Da es Einsatzmöglichkeiten von Werkzeugrevolvern gibt, bei denen ein Wechsel der Werkzeugscheibe vorteilhaft wäre, liegt der Erfindung die Aufgabe zugrunde, ein Verfahren zum Wechseln der Werkzeugscheibe von Werkzeugrevolvern anzugeben, das sowohl für das Lösen der Werkzeugscheibe als auch das Verbinden der Werkzeugscheibe mit dem Werkzeugrevolver nur einfache Bewegungsvorgänge erforderlich macht. Diese Aufgabe löst ein Verfahren mit den Merkmalen des Anspruches 1.

Sowohl für das Lösen der Werkzeugscheibe vom Werkzeugrevolver als auch für das Herstellen der Verbindung zwischen der Werkzeugscheibe und dem Werkzeugrevolver muß eine Verbindungsstange nur Translationsbewegungen und Drehbewegungen ausführen. Hierbei handelt es sich um einfach auszuführende Bewegungsabläufe, wobei ein besonderer Vorteil des erfindungsgemäßen Verfahrens darin besteht, daß die auszuführenden Drehbewegungen mittels des Drehantriebes des Werkzeugrevolvers bewirkt werden können.

Der Erfindung liegt ferner die Aufgabe zugrunde, einen kostengünstigen Werkzeugrevolver für die Durchführung des erfindungsgemäßen Verfahrens vorzuschlagen. Diese Aufgabe löst ein Werkzeugrevolver mit den Merkmalen des Anspruches 2.

Ein derartiger Werkzeugrevolver stimmt weitgehend mit den bekannten Werkzeugrevolvern überein, bei denen nur der Wechsel der Werkzeuge oder Werkzeugmodule möglich ist. Zusätzlich benötigt er nur eine Spannvorrichtung mit einem Verbindungsstab, der mit der Werkzeugscheibe kuppelbar und von dieser abkuppelbar ist und außer dem Drehantrieb des Werkzeugrevolvers nur einen Linearantrieb benötigt.

Für die Drehmomentübertragung von der Werkzeugscheiben-Aufnahme zur Werkzeugscheibe ist wenigstens ein axial vorspringendes Mitnehmerelement vorgesehen, das durch eine Bewegung der Werkzeugscheibe weg von der Werkzeugscheiben-Aufnahme aus einer korrespondierend ausgebildeten Vertiefung aushebbar ist. Zum Lösen und Herstellen der drehfesten Verbindung zwischen der Werkzeugscheibe und der Werkzeugscheiben-Aufnahme ist dann nur eine Axialbewegung der Werkzeugscheibe relativ zum Werkzeugrevolver erforderlich, so daß die Spannvorrichtung im wirksamen Zustand nur die Werkzeugscheibe in Anlage an der Werkzeugscheiben-Aufnahme zu halten braucht.

Bei einer bevorzugten Ausführungsform ist die Kupplung, welche den Verbindungsstab mit der Werkzeugscheibe verbindet, als ein Bajonettverschluß ausgebildet, da ein solcher Verschluß konstruktiv einfach zu realisieren ist und für das Lösen und Schließen nur ein Drehen der beiden Teile relativ zueinander erforderlich macht.

Besonders vorteilhaft ist es ferner, die Antriebswelle des Werkzeugrevolvers als Hohlwelle auszubilden und den Verbindungsstab durch die Antriebswelle hindurch bis zur Betätigungsvorrichtung zu führen. Da diese Betätigungsvorrichtung nur eine Längsverschiebung des Verbindungsstabes zu bewirken braucht, kommt grundsätzlich jeder bekannte Linearantrieb hierfür in Frage. Bei einer bevorzugten Ausführungsform ist jedoch die Betätigungsvorrichtung als ein gleichachsig zur Verbindungsstange angeordnetes Zylinder-Kolben-Aggregat ausgebildet, weil sowohl der Raumbedarf als auch der Aufwand für ein solches Aggregat gering ist.

Die Anordnung der Betätigungsvorrichtung im Anschluß an das der Werkzeugscheibe abgekehrte Ende der Antriebswelle ist nicht nur insofern vorteilhaft, als hier in der Regel genügend Raum zur Verfügung steht, um die Betätigungsvorrichtung unterbringen zu können. Die Betätigungsvorrichtung kann dann auch in konstruktiv einfacher Weise drehfest mit der Antriebswelle verbunden werden.

Vorzugsweise ist eine die axiale Position der Verbindungsstange relativ zum Revolvergehäuse überwachende Sensoreinrichtung vorgesehen. Es kann dann in einfacher Weise kontrolliert werden, ob nach einem Wechsel der Werkzeugscheibe der Werkzeugrevolver wieder betriebsbereit ist. Aber auch für eine automatische Steuerung des Werkzeugscheibenwechsels sind die Signale einer solchen Sensoreinrichtung verwendbar.

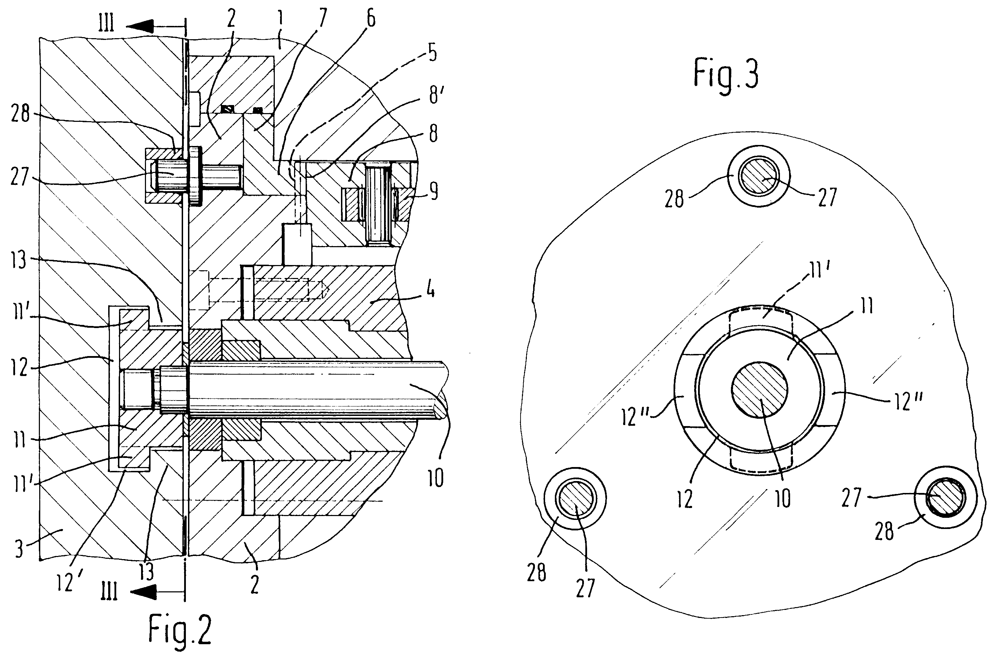

Im folgenden ist die Erfindung anhand eines in der Zeichnung dargestellten Ausführungsbeispiels im einzelnen erläutert. Es zeigen

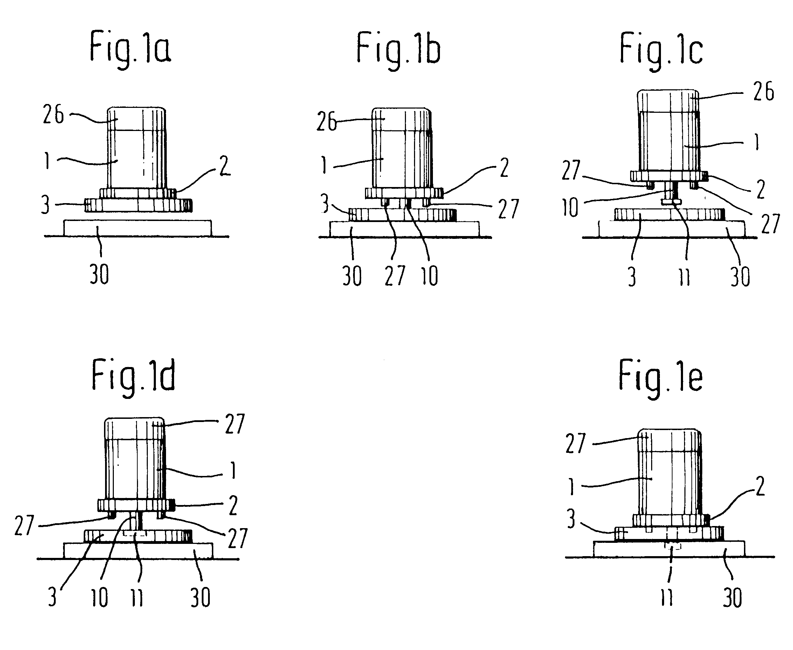

die Fig. 1 a - 1 e

je in schematischer Seitenansicht die Positionen der Werkzeugscheibe relativ zum Werkzeugrevolver und einer Palette in den einzelnen Abschnitten des Scheibenwechselvorganges,

Fig. 2

einen unvollständig dargestellten Längsschnitt des Werkzeugrevolvers und seiner Werkzeugscheibe,

Fig. 3

einen Schnitt nach der Linie III-III der Fig. 2,

Fig. 4

einen unvollständig dargestellten Längsschnitt des rückwärtigen Teils des Werkzeugrevolvers.

Im Bereich des einen Endes eines Gehäuses 1 eines Werkzeugrevolvers ist eine Werkzeugscheiben-Aufnahme 2 drehbar, aber axial unverschiebbar, gelagert, welche eine einer Scheibe ähnliche Form hat und auf der dem Gehäuse 1 abgewandten Seite eine ebene Anlagefläche für eine Werkzeugscheibe 3 bildet. Auf der der Werkzeugscheibe 3 abgewandten Seite ist die Werkzeugscheiben-Aufnahme 2 mit einer drehbar im Gehäuse 1 gelagerten, als Hohlwelle ausgebildeten Antriebswelle 4 verschraubt. Weiterhin ist die Werkzeugscheiben-Aufnahme 2 auf der der Werkzeugscheibe 3 abgewandten Seite mit einem konzentrisch zur Antriebswelle 4 liegenden Zahnkranz 5 versehen, an dessen radial verlaufende Zähne radial außen sich radial verlaufende Zähne eines zweiten Zahnkranzes 6 anschließen, die an einem fest mit dem Gehäuse 1 verbundenen Ring 7 vorgesehen sind. Ein axial verschiebbares Verriegelungsteil 8 ist auf seiner den beiden Zahnkränzen 5 und 6 zugekehrten Stirnseite mit einem Zahnkranz 8' versehen, der gleichzeitig in beide Zahnkränze 5 und 6 eingreifen kann. Die Werkzeugscheiben-Aufnahme 2 ist dann winkelgenau in einer der auswählbaren Winkelstellungen drehfest mit dem Gehäuse 1 verriegelt. Die axiale Position des Verriegelungsteiles 8 bezüglich der Werkzeugscheiben-Aufnahme 2 und des Ringes 7 wird in bekannter Weise mittels eines nicht dargestellten Steuerungsgliedes bestimmt, das konzentrisch zur Antriebswelle 4 drehbar im Gehäuse 1 neben dem Verriegelungsteil 8 gelagert ist und auf seiner letzterem zugewandten Stirnfläche mit einer Nockenbahn versehen ist, an der Rollen 9 des Verriegelungsteiles anliegen.

Durch die hohle Antriebswelle 4 hindurch ist ein Verbindungsstab 10 geführt, der über die Anlagefläche der Werkzeugscheiben-Aufnahme 2 für die Werkzeugscheibe 3 übersteht und hier einen Kupplungskopf 11 trägt. Dieser fest mit dem Verbindungsstab 10 verbundene Kupplungskopf 11 weist ein zylindrisches Mittelteil auf, von dem zwei diametral angeordnete Klauen 11' radial abstehen. Wie Fig. 2 zeigt, sind die Klauen 11' in axialer Richtung gegenüber der der Werkzeugscheiben-Aufnahme 2 zugewandten Stirnfläche des Mittelteiles versetzt, so daß der Kupplungskopf 11 eine hammerkopfartige Querschnittsform hat.

Die Werkzeugscheibe 3 ist auf der der Werkzeugscheiben-Aufnahme 2 zugekehrten Seite in ihrem Zentrum mit einer von dieser Seite her in sie eindringenden Ausnehmung 12 versehen, deren axiale Tiefe etwas größer ist als die axiale Länge des Kupplungskopfes 11. Die Ausnehmung 12 bildet zusammen mit dem Kupplungskopf 11 einen Bajonettverschluß. Von einem zylindrischen Innenbereich der Ausnehmung 12 dringt deshalb im Abstand von der der Werkzeugscheiben-Aufnahme 2 zugekehrten Stirnfläche der Werkzeugscheibe 3 in diese in radialer Richtung eine Ringnut 12' ein. Die zwischen dieser Ringnut 12' und der der Werkzeugscheiben-Aufnahme 2 zugekehrten Stirnfläche der Werkzeugscheibe 3 liegende, ringförmige Materialpartie 13 ist an zwei diametral liegenden Stellen mit axial verlaufenden Kanälen 12" versehen, durch die hindurch die Klauen 11' in die Ausnehmung 12 eingeführt und aus dieser herausgeführt werden können. Wie die Fig. 2 und 3 zeigen, hintergreifen die Klauen 11' in einer gegenüber dieser Winkelstellung um 90 ° gedrehten Winkelstellung die Materialpartien 13.

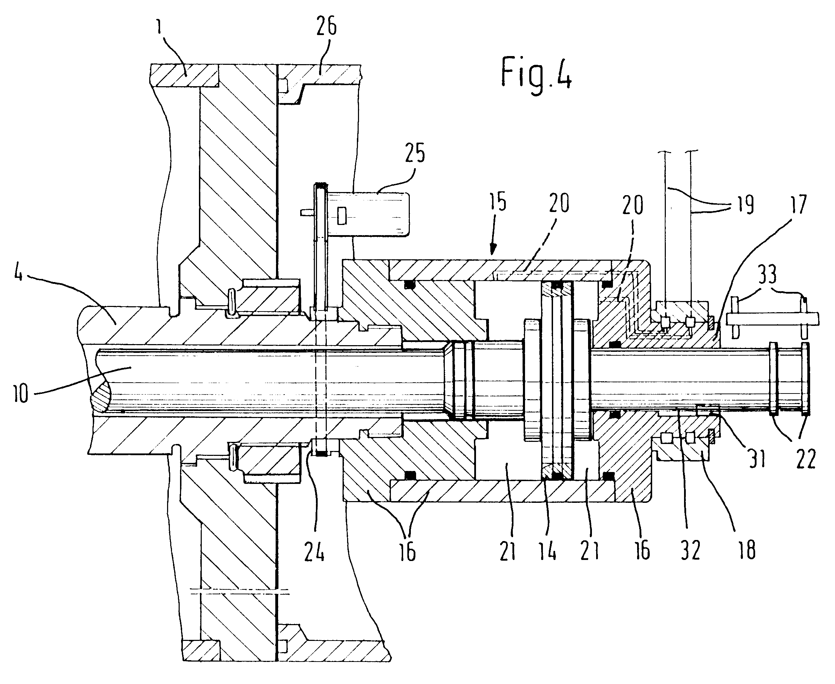

Wie Fig. 4 zeigt, erstreckt sich die Verbindungsstange 10 über das der Werkzeugscheiben-Aufnahme 2 abgewandte Ende der Antriebswelle 4 hinaus und trägt hier einen Kolben 14 eines doppelt wirkenden hydraulischen Zylinder-Kolben-Aggregates 15. Der den Kolben 14 enthaltende Zylinder 16 des Zylinder-Kolben-Aggregates 15 übergreift konzentrisch den Endabschnitt der Antriebswelle 4 und ist mit dieser fest verbunden. Auf der der Antriebswelle 4 abgekehrten Seite weist der Zylinder 16 einen nabenförmigen Fortsatz 17 auf, mit dem der die Kolbenstange bildende Verbindungsstab 10 mittels einer Paßfeder 31 und einer diese aufnehmenden axialen Nut 32 drehfest, aber axial verschiebbar, verbunden ist. Der Fortsatz 17 bildet zusammen mit einem ihn aufnehmenden Ringkörper 18 einen hydraulischen Drehverteiler, welcher die Verbindung zwischen ortsfesten Verbindungsleitungen 19 und Bohrungen 20 des Zylinders 16 herstellt, welche in den einen bzw. anderen Arbeitsraum 21 des Zylinders 16 münden.

Ein über den Fortsatz 17 überstehender Endabschnitt des Verbindungsstabes 10 trägt in axialem Abstand voneinander angeordnete Steuerringe 22, die zusammen mit zwei ortsfest angeordneten Endschaltern 23 eine Sensoreinrichtung bilden, mittels deren eine Stellungskontrolle des Verbindungsstabes 10 durchgeführt wird.

Auf der Antriebswelle 4 ist fest ein Zahnrad angeordnet, welches zu einem Getriebe gehört, über das ein nicht dargestellter Elektromotor die Antriebswelle 4 zu drehen vermag. Außer dem Zahnrad ist fest mit der Antriebswelle 4 eine Riemenscheibe 24 verbunden, über die ein Zahnriemen läuft, der die Drehbewegungen der Antriebswelle 4 auf einen Winkelpositionsgeber 25 überträgt.

Sowohl der nicht dargestellte Elektromotor als auch der Winkelpositionsgeber 25 und das Zylinder-Kolben-Aggregat 15 werden von einer sich an das Gehäuse 1 anschließenden, in Fig. 4 nur angedeuteten Schutzhaube 26 abgedeckt.

Für die Drehmomentübertragung zwischen der Werkzeugscheibe 3 und der Werkzeugscheiben-Aufnahme 2 weist letztere mehrere, im Ausführungsbeispiel drei gleich sowie in Umfangsrichtung gegeneinander versetzte und gleiche Abstände zur Längsachse der Antriebswelle 4 aufweisende Mitnehmerbolzen 27 auf, welche über die der Werkzeugscheibe 3 zugekehrte Anlagefläche der WerkzeugscheibenAufnahme 2 überstehen. Für eine spielfreie Aufnahme dieser Mitnehmerbolzen 27 ist die Werkzeugscheibe 3 mit entsprechend angeordneten, eingelassenen Buchsen 28 versehen.

In der in Fig. 2 dargestellten Betriebsposition ist die Werkzeugscheibe 3 fest mit der Werkzeugscheiben-Aufnahme 2 verbunden, weil die Mitnehmerbolzen 27 in spielfreiem Eingriff mit den Buchsen 28 stehen, die Klauen 11' des Kupplungskopfes 11 die Materialpartien 13 hintergreifen und der in Fig. 4 links dargestellte Arbeitsraum 21 unter Druck steht, wohingegen der in Fig. 4 rechts dargestellte Arbeitsraum drucklos ist, so daß die Werkzeugscheibe 3 mit der vom Zylinder-Kolben-Aggregat 15 erzeugten Spannkraft an die Anlagefläche der Werkzeugscheiben-Aufnahme 2 angepreßt wird. Soll nun die Werkzeugscheibe 3 gewechselt werden, dann wird der Werkzeugrevolver mittels des ihn tragenden Schlittens oder dergleichen in die in Fig. 1 a dargestellte Löseposition gefahren, in welcher sich die Werkzeugscheibe 3 im Abstand über einer Palette 30 befindet. Die Längsachse der Antriebswelle 4 verläuft in dieser Löseposition in Richtung der Z-Achse, also einer der Achsen, in welcher der Werkzeugrevolver mittels des ihn tragenden Schlittens bewegt werden kann. Nun wird der in Fig. 4 links dargestellte Arbeitsraum 21 drucklos gemacht. Dadurch kann sich die Werkzeugscheibe 3 auf die Palette 30 absenken. Dabei treten die Mitnehmerbolzen 27 aus den Buchsen 28 heraus und der Verbindungsstab 10 sowie der auf ihm angeordnete Kolben 14 gelangen in ihre eine Endlage. Nunmehr wird der Elektromotor eingeschaltet, wodurch wegen der drehfesten Verbindung des Verbindungsstabes 10 über den Zylinder 16 mit der Antriebswelle 4 der Kupplungskopf 11 um 90 ° relativ zur Werkzeugscheibe 3 in seine Ausfahrstellung gedreht wird. Sobald diese Ausfahrstellung erreicht ist, wird das Gehäuse 1 in Richtung der Z-Achse in die Ausgangsstellung zurückgefahren. Dabei kommt der Kupplungskopf 11 in die in Fig. 1 c dargestellte Lage, in der er sich außerhalb der Ausnehmung 12 befindet. Man könnte zwar den Kupplungskopf 11 auch dadurch aus der Ausnehmung 12 ausfahren, daß man den in Fig. 4 links dargestellten Arbeitsraum 21 des Zylinder-Kolben-Aggregates 15 wieder mit Druck beaufschlagt. Dies würde aber ein Zylinder-Kolben-Aggregat mit größerem Hub erforderlich machen.

Nun wird die Werkzeugscheibe 3 mittels der Palette 30 abtransportiert und eine andere Werkzeugscheibe 3, die ebenfalls auf einer Palette 30 liegt, unter der Werkzeugscheiben-Aufnahme 2 auf diese ausgerichtet. Danach wird das Gehäuse 1 abgesenkt, und zwar so weit, bis der Kupplungskopf 11 in der Ausnehmung 12 die in Fig. 1 d dargestellte Ausfahrstellung erreicht hat. Um den Bajonettverschluß zu schließen, wird jetzt wieder der Elektromotor des Werkzeugrevolvers eingeschaltet, der durch eine Drehung der Antriebswelle 4 um 90 ° den Verbindungsstab 10 ebenfalls um 90 ° dreht und dabei die Klauen 11' in diejenige Position bringt, in welcher sie die Materialpartien 13 hintergreifen. Im Ausführungsbeispiel werden nach dieser Drehbewegung beide Arbeitsräume 21 des Zylinder-Kolben-Aggregates 15 drucklos gemacht, weil nun das Gehäuse 1 durch eine Bewegung des Werkzeugrevolvers in der Z-Achse abgesenkt wird, wobei der Kolben 14 verschoben und die Mitnehmerbolzen 17 in die Buchsen 28 eingefahren werden. Man könnte aber auch die Werkzeugscheibe 3 dadurch in Anlage an die Werkzeugescheiben-Aufnahme 2 bringen, daß man mit Hilfe des Zylinder-Kolben-Aggregates 15 die Werkzeugscheibe 3 gegen die Werkzeugscheiben-Aufnahme 2 bewegt. Zum Schluß wird der in Fig. 4 links dargestellte Arbeitsraum 21 wieder unter Druck gesetzt, damit die Werkzeugscheibe 3 unter Druck an der Werkzeugscheiben-Aufnahme 2 anliegt.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

**Patentansprüche**

1. Verfahren zum Wechseln der Aufnahmen für Werkzeuge aufweisenden Werkzeugscheibe eines Werkzeugrevolvers, die lösbar mit einer Werkzeugscheiben-Aufnahme verbunden ist, welche ihrerseits relativ zum Gehäuse des Werkzeugrevolvers drehbar und in wählbaren Winkelstellungen mit dem Gehäuse verriegelbar ist, dadurch gekennzeichnet, daß

   a) die Werkzeugscheibe aus ihrer Arbeitsstellung, in der sie mit einer von einem Drehantrieb drehbaren Antriebswelle gekuppelt ist, in Richtung dieser Antriebswelle vom Gehäuse weg bis in eine Übergabeposition bewegt wird, in welcher sie von einer Transporteinrichtung aufgenommen wird,
   b) die Antriebswelle und eine mit ihr gekuppelte Verbindungsstange mittels des Drehantriebes aus einer Verbindungsstellung in eine Lösestellung gedreht wird, in welcher die Verbindung zwischen der in ihrer axialen Richtung relativ zum Gehäuse verschiebbaren Verbindungsstange und der Werkzeugscheibe gelöst ist,

c) die Verbindungsstange aus der Werkzeugscheibe herausgezogen wird,

d) die Werkzeugscheibe aus der Übergabeposition entfernt und eine andere Werkzeugscheibe in die Übergabeposition gebracht wird,

e) die Verbindungsstange in Eingriff mit der anderen Werkzeugscheibe gebracht wird,

f) die Antriebswelle und die Verbindungsstange mittels des Drehantriebs aus der Lösestellung in die Verbindungsstellung gedreht werden, in welcher die Verbindungsstange in axialer Richtung formschlüssig mit der Werkzeugscheibe verbunden ist, und

g) durch eine Relativbewegung zwischen dem Gehäuse und der Werkzeugscheibe diese in ihre Arbeitsstellung gebracht wird.

2. Werkzeugrevolver zur Durchführung des Verfahrens gemäß Anspruch 1 mit einer Werkzeugscheiben-Aufnahme, an welcher eine Werkzeugscheibe festlegbar ist und die über eine zentrale Antriebswelle mittels eines Drehantriebes relativ zum Gehäuse des Werkzeugrevolvers verdrehbar ist,

**gekennzeichnet durch** eine Spannvorrichtung (10, 11, 15) mit einem zur Antriebswelle (4) konzentrisch angeordneten Verbindungsstab (10), der

a) mittels einer Betätigungsvorrichtung (15) relativ zum Gehäuse (1) des Werkzeugrevolvers in axialer Richtung verschiebbar ist,

b) mit der Antriebswelle (4) auf Drehung verbunden ist und

c) an seinem einen Ende ein Kupplungselement (11) aufweist, das zusammen mit einem in der Werkzeugscheibe vorgesehenen Kupplungselement (12, 13) eine durch eine Drehbewegung der beiden Kupplungselemente (11, 12, 13) relativ zueinander schließbare sowie lösbare und im geschlossenen Zustand in axialer Richtung formschlüssige Kupplung bildet.

3. Werkzeugrevolver nach Anspruch 2, dadurch gekennzeichnet, daß für die drehfeste Verbindung der Werkzeugscheibe (3) mit der Werkzeugscheiben-Aufnahme (2) an ersterer oder letzterer wenigstens ein axial vorspringendes Mitnehmerelement (27) vorgesehen ist, das durch eine Bewegung der Werkzeugscheibe (3) weg von der Werkzeugscheiben-Aufnahme (2) aus einer korrespondierend ausgebildeten Vertiefung (28) aushebbar ist.

4. Werkzeugrevolver nach Anspruch 2 oder 3, dadurch gekennzeichnet, daß die Kupplung (11, 12, 13) als Bajonettverschluß ausgebildet ist.

5. Werkzeugrevolver nach Anspruch 4, dadurch gekennzeichnet, daß das an der Verbindungsstange (10) vorgesehene Kupplungselement (11) wenigstens einen radialen Vorsprung (11') aufweist, der im geschlossenen Zustand der Kupplung in eine Ausnehmung (12) der Werkzeugscheibe (3) eingreift sowie eine Werkstoffpartie (13) der Werkzeugscheibe (3) hintergreift und in der Lösestellung der Kupplung in einem von der Ausnehmung (12) gebildeten, parallel zur Längsachse der Verbindungsstange (10) verlaufenden Ein- und Ausfahrkanal (12'') liegt.

6. Werkzeugrevolver nach einem der Ansprüche 2 bis 5, dadurch gekennzeichnet, daß die Antriebswelle (4) als Hohlwelle ausgebildet ist und der Verbindungsstab (10) durch die Antriebswelle (4) hindurch zu der Betätigungsvorrichtung (15) geführt ist.

7. Werkzeugrevolver nach einem der Ansprüche 2 bis 6, dadurch gekennzeichnet, daß die Betätigungsvorrichtung (15) als ein gleichachsig zum Verbindungsstab (10) angeordnetes Zylinder-Kolben-Aggregat ausgebildet ist.

8. Werkzeugrevolver nach Anspruch 7, dadurch gekennzeichnet, daß der Kolben (14) auf einem Endabschnitt des Verbindungsstabes (10) fest angeordnet und der Zylinder (16) drehfest sowohl mit diesem Endabschnitt des Verbindungsstabes (10) als auch mit der Antriebswelle (4) verbunden ist.

9. Werkzeugrevolver nach Anspruch 7 oder 8, dadurch gekennzeichnet, daß der Zylinder (16) einen zum Verbindungsstab (10) konzentrischen, nabenartigen Fortsatz (17) aufweist, der zusammen mit einem ihn umfassenden Ringkörper (18) einen hydraulischen Drehverteiler bildet, über den Zuleitungen (19) zu beiden Arbeitsräumen (21) des doppelt wirkenden Zylinder-Kolben-Aggregates (15) geführt sind.

10. Werkzeugrevolver nach einem der Ansprüche 2 bis 9, gekennzeichnet durch eine die axiale Position der Verbindungsstange (10) relativ zum Gehäuse (1) des Werkzeugrevolvers überwachende Sensoreinrichtung (22, 23).

# Fig.1a

# Fig.1b

# Fig.1c

# Fig.1d

# Fig.1e

EP 0 490 030 A2

Fig.3

Fig.2

Fig.4